# EUROPÄISCHE PATENTSCHRIFT

(11) **EP 3 333 524 B1**
(45) Veröffentlichungstag und Bekanntmachung des Hinweises auf die Patenterteilung: **25.03.2026**
(21) Anmeldenummer: 17206062.6
(22) Anmeldetag: 08.12.2017
(51) Int. Cl.: F26B 17/04, F26B 21/04, F26B 21/08, F26B 23/00

(54) **DURCHLAUFTROCKNER ZUM TROCKNEN EINES GUTES MITTELS WARMLUFT MIT MINDESTENS ZWEI SEKTIONEN**
CONTINUOUS DRYER FOR DRYING AN ARTICLE USING WARM AIR WITH AT LEAST TWO SECTIONS
SÉCHOIR CONTINU PERMETTANT LE SÉCHAGE D'UN OBJET PAR AIR CHAUD DOTÉ D'AU MOINS DEUX SECTIONS

(30) Priorität: 11.12.2016 DE 102016014643
(43) Veröffentlichungstag der Anmeldung: 13.06.2018
(73) Patentinhaber: STELA Laxhuber GmbH, 84323 Massing (DE)
(72) Erfinder: Laxhuber, Thomas Christian, 84323 Massing (DE); Latein, Tobias, 84567 Erlbach (DE)
(74) Vertreter: Rothkopf, Ferdinand

(56) Entgegenhaltungen:
- EP-A1- 2 587 203
- WO-A1-2004/109003
- WO-A1-2012/149842
- WO-A1-2015/127490
- CN-U- 203 704 603
- CN-Y- 201 289 275
- US-A- 4 756 092
- US-A1- 2002 038 521
- US-A1- 2007 144 062

## Beschreibung

### Hintergrund der Erfindung

Die Erfindung betrifft einen Durchlauftrockner zum Trocknen eines Gutes mittels Warmluft mit einer ersten und einer zweiten Sektion, die vom Gut in einer Transportrichtung nacheinander durchlaufen werden, bei dem eine Frischluftzuführeinrichtung zum Zuführen von Frischluft als erste Zuluft in die erste Sektion vorgesehen ist, eine Abluftrückführeinrichtung zum Abführen von Abluft aus der zweiten Sektion und Rückführen als zweite Zuluft zurück in die zweite Sektion vorgesehen ist und ein erster Wärmeübertrager vorgesehen ist, durch den hindurch zum einen Frischluft und zum anderen Abluft geführt sind, zum Übertragen von Abwärme der Abluft in die Frischluft.

Ein Durchlauftrockner ist ein Trockner, bei dem zu trocknendes Gut kontinuierlich oder chargenweise durch den Trockner transportiert wird. Ein solcher Trockner ist insbesondere ein Bandtrockner, der mittels eines Bandes das zu trocknende Gut durch den Durchlauftrockner fördert. Das zu trocknende Gut, zum Beispiel Klärschlamm, Holzspäne, Hackschnitzel, RDF (refuse-derived fuel), SSW (solid shredded waste), MSW (municipal solid waste), Hausabfälle, Gras oder landwirtschaftliche Produkte und Nebenprodukte wie Zuckerrübenschnitzel ist dabei zunächst feucht bzw. nass. Das Gut wird getrocknet, wobei ihm Feuchtigkeit mittels Warmluft entzogen wird. Die Warmluft wird extra erzeugt, indem insbesondere Luft aus der Umgebung des Durchlauftrockners erwärmt wird. Beim Erwärmen der Luft sinkt die relative Luftfeuchte dieser Luft, die Luft wird "trockener". Diese Warmluft mit niedriger relativer Luftfeuchte durchströmt dann im Durchlauftrockner das zu trocknende Gut bzw. umströmt dessen Bestandteile. Das zu trocknende Gut wird zugleich in einer Transportrichtung durch den Durchlauftrockner gefördert und durchläuft dabei mindestens zwei Sektionen. Die einzelne Sektion unterteilt den Durchlauftrockner räumlich. Die Sektionen sind dazu voneinander luftströmungsmäßig weitgehend getrennt. Es sind so in den Sektionen unterschiedliche Luftströme möglich, die je unterschiedliche relative Luftfeuchten und unterschiedliche Temperaturen aufweisen können. Zum Erwärmen der Luft zu Warmluft wird natürlich Energie benötigt. Diese Energie ist verloren, wenn die erzeugte Warmluft nach dem Trocknen des Gutes in die Umgebung entlassen wird. Es sind daher erste Ansätze bekannt, um die Warmluft im Kreislauf zu führen.

Aus CN 201 289 275 Y ist eine Trocknungsvorrichtung einer Verbund-Beschichtungsanlage mit mehreren Trocknungszonen bekannt. An jeder Trocknungszone kann eine Abgas-Wärmerückgewinnungsvorrichtung angeordnet sein, die eine Abgas-Passage, eine Frischluft-Einlass-Passage und einen Wärmeübertrager umfasst. Durch den Wärmeübertrager ist Frischluft durch die Frischluft-Einlass-Passage und Abgas durch die Abgas-Passage zum Übertragen der Wärme des Abgases an die Frischluft geführt. Dabei ist die Frischluft mittels der Frischluft-Einlass-Passage in die erste Trocknungszone geführt. Zudem ist das Abgas aus der nachfolgenden weiteren Trocknungszone mittels eines Ventilators durch eine Leitung wieder in die dieselbe weitere Trocknungszone rückgeführt. Ferner ist das Abgas aus dieser weiteren Trocknungszone mittels einer Leitungsanordnung durch den Wärmeübertrager hindurch und dann in die erste Trocknungszone geführt.

### Zugrundeliegende Aufgabe

Der Erfindung liegt die Aufgabe zugrunde, einen Durchlauftrockner zum Trocknen eines Gutes mittels Warmluft zu schaffen, der im Vergleich zu bekannten Durchlauftrocknern eine weitergehende Energieeinsparung möglich macht.

### Erfindungsgemäße Lösung

Diese Aufgabe ist erfindungsgemäß mit einem Durchlauftrockner nach Anspruch 1 gelöst, zum Trocknen eines Gutes mittels Warmluft mit einer ersten und einer zweiten Sektion, die vom Gut in einer Transportrichtung nacheinander durchlaufen werden. Es ist gemäß der Erfindung dabei eine Frischluftzuführeinrichtung zum Zuführen von Frischluft als erste Zuluft in die erste Sektion vorgesehen, eine Abluftrückführeinrichtung zum Abführen von Abluft aus der zweiten Sektion und Rückführen als zweite Zuluft zurück in die zweite Sektion vorgesehen und ein erster Wärmeübertrager vorgesehen, durch den hindurch zum einen Frischluft und zum anderen Abluft geführt sind, zum Übertragen von Abwärme der Abluft in die Frischluft. Erfindungsgemäß ist ferner eine Leitungsanordnung vorgesehen, mittels der die Abluft aus der zweiten Sektion durch den ersten Wärmeübertrager hindurch und dann in die erste Sektion geführt ist.

Bei dem erfindungsgemäßen Durchlauftrockner ist eine Frischluftzuführeinrichtung vorgesehen, die aus der Umgebung entnommene, in der Regel trockene Frischluft dem Durchlauftrockner als erste Zuluft zuführt. An dem Durchlauftrockner führt ferner eine Abluftrückführeinrichtung Abluft von einem Trocknungsvorgang aus der zweiten Sektion ab. Diese Abluft wird zumindest teilweise in die zweite Sektion des Durchlauftrockners zurückgeführt.

Ein Teil der Abluft wird ferner erfindungsgemäß zu mindestens einem ersten Wärmeübertrager geführt, an dem thermische Energie bzw. Abwärme von der Abluft an die ebenfalls durch den Wärmeübertrager strömende erste Zuluft übergeführt wird. Die beiden Ströme von Abluft und erster Zuluft sind dabei am ersten Wärmeübertrager insbesondere mittels einer Trennfläche voneinander getrennt. An der Trennfläche strömt dann auf der einen Seite die Abluft und auf der anderen Seite die erste Zuluft entlang. Durch die Trennfläche hindurch wird Wärmeenergie der Abluft an die Frischluft abgegeben. Die Abwärme der Abluft erwärmt so die dem Durchlauftrockner zugeführte Frischluft und Wärmeenergie aus der Abluft wird zurückgewonnen. Zugleich sind die Luftströme von Abluft und erster Zuluft feuchtetechnisch voneinander getrennt. Die in der Abluft enthaltene Feuchte kann also nicht in die erste Zuluft übertreten.

Mittels einer Leitungsanordnung wird erfindungsgemäß die durch den ersten Wärmeübertrager geführte Abluft, welche aus der zweiten Sektion stammt, in die erste Sektion eingeleitet. Diese erste Sektion dient der ersten Trocknung des zu trocknenden Gutes. Das zu trocknende Gut weist daher in dieser ersten Sektion selbst einen vergleichsweise hohen Feuchtegehalt auf. Entsprechend kann mittels der rückgeführten Abluft aus der zweiten Sektion dennoch auf energieeffiziente Weise Feuchtigkeit aus dem Gut in der ersten Sektion entzogen werden.

Vorteilhaft ist der erfindungsgemäße erste Wärmeübertrager derart dimensioniert, dass an ihm Feuchtigkeit aus der Abluft auskondensiert. Feuchtigkeit kondensiert aus, wenn die relative Luftfeuchtigkeit der jeweils relevanten Luft 100% (in Worten: einhundert Prozent) erreicht ist. Die relative Luftfeuchtigkeit in Luft nimmt zu, wenn die Luft, wie in diesem Fall die warme Abluft, abkühlt. Andererseits nimmt die relative Luftfeuchte ab, wenn die Luft erwärmt wird. Diese physikalischen Effekte der Zu- bzw. Abnahme der Luftfeuchtigkeit sind im Mollier-h,x-Diagramm dargestellt. Das erfindungsgemäß angestrebte Auskondensieren wird vorzugsweise erzielt, indem die Feuchtigkeit an der Trennfläche des Wärmeübertragers auskondensiert. Dazu gibt die Abluft so viel thermische Energie an der Trennfläche ab, dass die relative Luftfeuchtigkeit in der Abluft 100% (in Worten: einhundert Prozent) erreicht. Der erfindungsgemäße erste Wärmeübertrager hat so vorteilhaft drei Funktionen. Die erste Funktion ist das Entfeuchten der Abluft, die durch den ersten Wärmeübertrager strömt. Die zweite Funktion ist das Aufheizen der zugeführten Frischluft. Die dritte Funktion ist das Verringern relativer Luftfeuchte der zugeführten Frischluft, bedingt durch das Aufheizen dieser Frischluft.

Erfindungsgemäß ist ferner mindestens ein zweiter Wärmeübertrager vorgesehen, durch den hindurch ebenfalls zum einen Frischluft und zum anderen Abluft geführt sind, zum Übertragen von Abwärme der Abluft in die Frischluft, wobei die dabei erwärmte Frischluft in die zweite Sektion geführt ist. Mittels des zweiten Wärmeübertragers kann aus der durch ihn hindurch geleiteten Abluft weitere Restwärme entzogen werden. Zugleich kann diese Restwärme vorteilhaft zum Aufwärmen von Frischluft verwendet werden, die einen vergleichsweise kleinen Feuchtegehalt aufweist und dann in die zweite Sektion geleitet wird. In der zweiten Sektion findet das fertige Austrocknen des zu trocknenden Gutes statt. Entsprechend ist es in dieser zweiten Sektion besonders vorteilhaft, wenn in diese zweite Sektion Luft mit nur geringem Feuchtegehalt zum Trocknen eingeleitet wird. Mit dem erfindungsgemäßen zweiten Wärmeübertrager wird erreicht, dass nicht etwa die am ersten Wärmeübertrager abgekühlte, zugleich aber noch vollständig aufgesättigte Abluft in die zweite Sektion zurückgeleitet wird, sondern stattdessen aufgewärmte Frischluft, welche einen vergleichsweise geringeren Feuchtegehalt aufweist.

Der zweite Wärmeübertrager ist vorteilhaft ebenfalls derart dimensioniert, dass an ihm Wasser aus der Abluft auskondensiert. Der zweite Wärmeübertrager nutzt damit ebenfalls den durch Auskondensation entstehenden Wärme- und Feuchteentzug aus der Abluft.

Hinsichtlich der Strömungsrichtung der Abluft ist der zweite Wärmeübertrager vorzugsweise vor dem ersten Wärmeübertrager angeordnet. Durch die derartige Abfolge von mehreren separaten, insbesondere auch räumlich und/oder steuerungstechnisch getrennten Wärmeübertragern ist eine thermodynamisch vorteilhafte Gesamtanordnung geschaffen, bei der die bestehenden Temperatur- und Feuchteunterschiede besonders vorteilhaft genutzt werden können.

Vorzugsweise sind ferner Steuerungsmittel, insbesondere in Form von mit Luftklappen versehene Zuführleitungen, vorgesehen, mittels denen ein Durchleiten von Frischluft durch den ersten Wärmeübertrager und/oder den zweiten Wärmeübertrager getrennt zu steuern sind. Die beiden erfindungsgemäßen Wärmeübertrager können so separat an bestehende Gegebenheiten während des Betriebs des erfindungsgemäßen Durchlauftrockners angepasst werden.

Erfindungsgemäß bevorzugt ist ferner ein erster Heizer vorgesehen, mittels dem die erste Zuluft vor deren Zuführen in die erste Sektion und die durch den Wärmeübertrager geführte Abluft aus der zweiten Sektion vor deren Zuführen in die erste Sektion aufzuheizen sind. Ein Heizer erwärmt mittels Energiezufuhr Luft. Der Heizer ist zum Beispiel ein Warmwasser-Wärmetauscher, ein Dampf-Wärmetauscher, eine Elektroheizeinrichtung oder ein Heizbrenner. Beim Erwärmen der Luft mit dem Heizer sinkt, wie bereits oben erwähnt, die relative Luftfeuchtigkeit dieser Zuluft. Eine niedrige Luftfeuchtigkeit ist beim Trocknen von Vorteil, da die derartige Zuluft dann wieder mehr Wasser aufnehmen kann. Wärmere Zuluft kann also mehr Wasser aufnehmen als kältere Zuluft. Die erste Zuluft wird erfindungsgemäß der ersten Sektion zugeführt. In dieser ersten Sektion ist die Feuchtigkeit des zu trocknenden Gutes bezogen auf dessen Förderrichtung noch am größten. Deshalb ist es besonders von Vorteil, wenn an dieser ersten Sektion die aus der zweiten Sektion abgeleitete, an dem bzw. den erfindungsgemäßen Wärmeübertragern bzw. Wärmetauschern entfeuchtete Abluft aus der zweiten Sektion vor einem Einleiten in die erste Sektion aufgeheizt wird. Indem dieses Aufheizen von Abluft zusammen mit der zugeführten Frischluft mittels eines gemeinsamen Heizers geschieht, können zusätzliche Bauteile eingespart werden.

Ferner ist vorteilhaft ein zweiter Heizer vorgesehen, mittels dem die zweite Zuluft vor deren Rückführen in die zweite Sektion und die durch den zweiten Wärmeübertrager geführte Frischluft vor deren Zuführen in die zweite Sektion aufzuheizen sind. Wie bereits beschrieben nimmt die relative Luftfeuchtigkeit von Luft ab, wenn diese erwärmt wird. Ein zweiter Heizer, der die rückgeführte Zuluft und die in die zweite Sektion neu zugeführte Frischluft als zweite Zuluft aufheizt, verringert so die relative Luftfeuchte in dieser zweiten Zuluft. Eine niedrige relative Luftfeuchte in der zweiten Zuluft ist insbesondere dann von Vorteil, wenn aus dem zu trocknenden Gut in der zweiten Sektion vergleichsweise geringe Restfeuchte zu entfernen ist.

In bevorzugter Weise ist ferner die Abluftrückführeinrichtung mit einer Rückführleitung versehen, die zum direkten Rückführen von Abluft aus der zweiten Sektion als Umluft zurück in die zweite Sektion dient. Die Abluftrückführeinrichtung führt mittels der Rückführleitung Abluft aus der zweiten Sektion unmittelbar in die zweite Sektion zurück. Die direkt rückgeführte Abluft aus der zweiten Sektion wird mit der zugeführten Frischluft vermischt, was entsprechend zur Folge hat, dass in die zweite Sektion eine Mischung aus behandelter Zuluft und unbehandelter Abluft strömt. Diese Mischung weist eine Mischtemperatur und eine Mischluftfeuchte auf. So ist die Zuluft kälter und trockener und die Abluft wärmer und feuchter. Vorteilhaft kann die Zuluft sehr kalt und sehr trocken sein, weil sie direkt von dem wenngleich auch feuchten, aber warmen Anteil der rückgeführten Abluft erwärmt wird. Ferner ist mit dieser direkten Rückführung auch eine besonders einfache Steuerung der Feuchte und der Temperatur der Luft in der zweiten Sektion möglich.

Erfindungsgemäß bevorzugt sind bei der zweiten Sektion mindestens zwei luftströmungsmäßig weitgehend getrennte Bereiche bzw. Untersektionen vorgesehen und die Abluft der beiden Bereiche wird gesammelt durch den Wärmeübertrager geführt. Die zweite Sektion ist auf diese Weise ihrerseits weiter unterteilt, eben in mindestens einen ersten und einen zweiten Bereich. Diese Bereiche sind in Transportrichtung aufeinander folgend in Reihe geschaltet. Der jeweilige Bereich weist in der Regel eine eigene Temperatur und eine eigene relative Luftfeuchtigkeit des Luftstroms innerhalb dieses Bereiches auf. Vorteilhaft ist diese Temperatur und relative Luftfeuchte an die vorherrschenden Feuchtigkeitsbedingungen des dort jeweils zu trocknenden Gutes angepasst. Aus den jeweiligen Bereichen abzuführende Abluft wird zusammengeführt und gemeinsam an den Wärmeübertrager geleitet. Vorteilhaft bildet sich mit dem Sammeln der Abluft ein Abluftgemisch aus. Das Abluftgemisch weist eine weitgehend einheitliche, gemeinsame relative Luftfeuchtigkeit und eine Mischtemperatur auf. Besonders vorteilhaft ist es dabei, dass nicht für jeden einzelnen Bereich ein separater Wärmeübertrager vorgesehen werden muss, sondern dass insbesondere ein einziger Wärmeübertrager für die gesamte abzuführende Abluft aus den mehreren Bereichen ausreicht.

Vorteilhaft ist ferner in zumindest einer der Sektionen und/oder Bereiche ein Abluft-Sensor vorgesehen, mittels dessen in der Abluft deren Feuchte zu ermitteln ist. Ein derartiger Luft-Sensor ermittelt insbesondere die relative Luftfeuchtigkeit und/oder die Temperatur der ihn an- oder umströmenden Luft. Vorteilhaft ist mittels des Abluft-Sensors so die relative Luftfeuchtigkeit der Abluft zu ermitteln. Wenn die relative Luftfeuchtigkeit der Abluft bekannt ist, kann mittels einer Steuerung definiert sein, ob diese Abluft zu entfeuchten ist oder ob diese Luft wieder direkt der jeweiligen Sektion bzw. dem jeweiligen Bereich zuzuführen ist.

Alternativ oder zusätzlich ist ferner ein Zuluft-Sensor vorgesehen, mittels dessen in der Zuluft deren Feuchte zu ermitteln ist. Der Zuluft-Sensor ermittelt die relative Luftfeuchtigkeit der anströmenden Zuluft. Vorteilhaft ist so zu ermitteln, mit welcher relativen Luftfeuchtigkeit die Zuluft in die jeweilige Sektion hineinströmt. Besonders vorteilhaft ist so auch zu ermitteln, ob und um wieviel Grad Celsius die Zuluft zusätzlich durch einen Heizer aufzuwärmen ist, um eine gewünschte relative Luftfeuchtigkeit in der Zuluft zu erreichen.

In bevorzugter Weise sind ferner zum Transportieren des Gutes durch den Durchlauftrockner zwei Bänder vorgesehen, die insbesondere der ersten Sektion sowie der zweiten Sektion zugeordnet sind. Ein derart zweigeteiltes Band in einem Durchlauftrockner ermöglicht es, dass jede der beiden Sektionen ein eigenes Band aufweist. So können die beiden Sektionen auch räumlich getrennt voneinander, insbesondere übereinander, angeordnet werden.

Erfindungsgemäß ist vorzugsweise die Transportrichtung von der zweiten Sektion zu der ersten Sektion gerichtet. Die derartige Transportrichtung ist also nicht von der ersten Sektion zur zweiten Sektion, sondern umgekehrt ausgerichtet. Eine derartige Transportrichtung in "entgegengesetzter Richtung" ermöglicht es, dass das Gut zuletzt mit zugeführter Frischluft zu trocknen ist. Dies ist besonders von Vorteil, wenn das Gut zuletzt mit besonders reiner Luft getrocknet werden soll. Als weiterer Vorteil kann bei dieser Transportrichtung der zweite Heizer zum Aufheizen der zweiten Zuluft klein gestaltet sein. Besonders vorteilhaft kann dieser Heizer entfallen.

Ferner ist vorzugsweise auch eine Regeleinrichtung vorgesehen, mittels der die Feuchte in der Abluft zu messen und eine Luftführung in der Abluftrückführeinrichtung, im ersten Wärmeübertrager und/oder im zweiten Wärmeübertrager zu regeln ist. Eine Regeleinrichtung bzw. Steuerung wertet Eingänge der Regeleinrichtung aus und regelt bzw. steuert mittels einer Logik der Regeleinrichtung deren Ausgänge. Als Eingänge dienen hier elektrische Signale von Sensoren unterschiedlicher Art, wie beispielsweise einem Temperatursensor oder einem Feuchtesensor. Als Ausgänge dienen meist Schalter oder elektrische Signale, beispielsweise zum Steuern des Heizers. Mittels der Regeleinrichtung ist vorteilhaft die Luftführung, insbesondere mittels Ventilation, in der Abluftrückführeinrichtung an die jeweilig vorherrschende relative Luftfeuchte der Abluft anzupassen.

Gemäß der Erfindung ist ferner ein Verfahren zum Betreiben eines Durchlauftrockners zum Trocknen eines Gutes mittels Warmluft nach Anspruch 9 vorgesehen, wobei eine erste und eine zweite Sektion vom Gut in einer Transportrichtung nacheinander durchlaufen werden, Frischluft als erste Zuluft in die erste Sektion zugeführt wird, Abluft aus der zweiten Sektion abgeführt und als zweite Zuluft in die zweite Sektion zurückgeführt wird sowie durch einen ersten Wärmeübertrager hindurch zum einen Frischluft und zum anderen Abluft geführt wird, zum Übertragen von Abwärme der Abluft in die Frischluft. Erfindungsgemäß wird die Abluft aus der zweiten Sektion durch den ersten Wärmeübertrager hindurch und dann in die erste Sektion geführt.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen stark vereinfachten Längsschnitt eines Durchlauftrockners gemäß dem Stand der Technik und
- Fig. 2: einen stark vereinfachten Längsschnitt eines erfindungsgemäßen Durchlauftrockners.

### Detaillierte Beschreibung des Ausführungsbeispiels

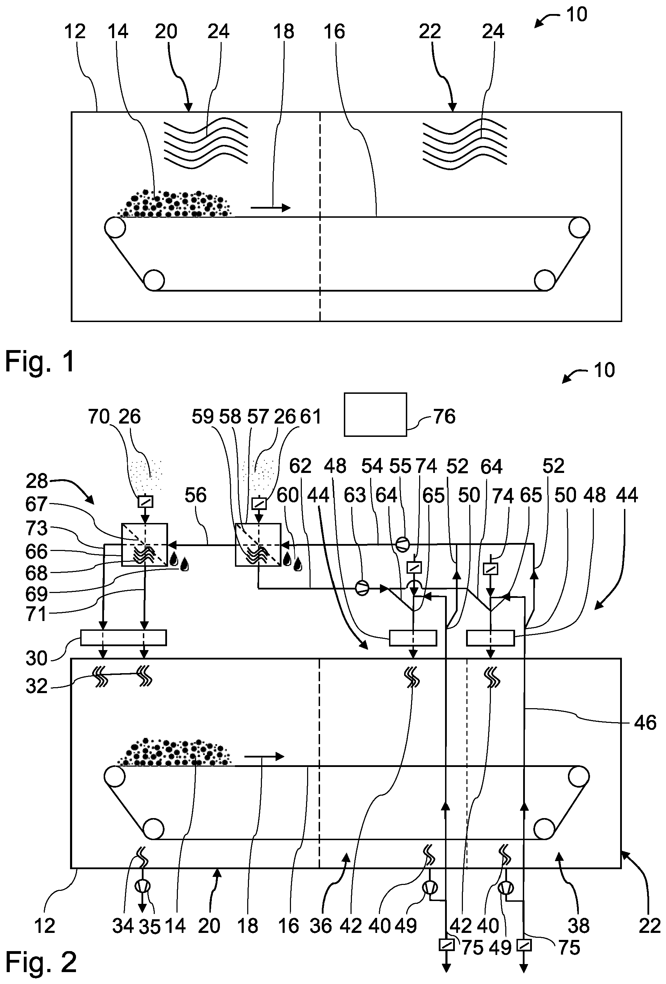

In den Fig. 1 und 2 ist je ein Durchlauftrockner 10 in Form eines Bandtrockners gezeigt. Der Durchlauftrockner 10 weist ein Gehäuse 12 auf, durch das zunächst feuchtes oder nasses Gut 14 mittels eines Bandes 16 in einer Transportrichtung 18 durch den Durchlauftrockner 10 hindurch zu transportieren ist.

Das Gut 14 durchläuft während des Transports zunächst eine erste Sektion 20 und danach eine zweite Sektion 22. Die beiden Sektionen 20 und 22 unterteilen das Gehäuse 12 räumlich. Sie sind in Transportrichtung gegebenenfalls mittels Trennwänden luftströmungstechnisch weitgehend voneinander getrennt. Innerhalb des Gehäuses 12 befindet sich Warmluft 24, die dem zu trocknenden Gut 14 (nicht dargestellte) Feuchtigkeit entzieht. Mit dem Entziehen von Feuchtigkeit aus dem Gut 14 wird das Gut 14 trockener, es wird getrocknet.

Fig. 2 veranschaulicht, wie bei dem dortigen Ausführungsbeispiel die Warmluft 24 erzeugt wird. Es strömt dazu Frischluft 26 von außerhalb des Gehäuses 12, gefördert von einer Frischluftzuführeinrichtung 28, in das Gehäuse 12. Die Frischluft 26 durchströmt einen ersten Heizer 30, der die Frischluft 26 auf ihrem Weg durch den Heizer 30 erwärmt. Mit dem Erwärmen der Frischluft 26 nimmt die relative Luftfeuchtigkeit der Frischluft 26 ab, die Frischluft 26 wird "trockener". Der Heizer 30 kann optional vorteilhaft auch insgesamt entfallen. Es kann damit überraschenderweise die Effizient der Gesamtanlage erhöht werden. Alternativ wird der Heizer 30 gezielt nur gedrosselt betrieben, wodurch der spezifische Energieverbrauch der Gesamtanlage (verbrauchte Energiemenge pro Menge verdampftem Wasser) optimiert werden kann.

Diese Frischluft 26 wird nach dem Erwärmen als erste Zuluft 32 bezeichnet. Die erste Zuluft 32 strömt in die erste Sektion 20 und umströmt dort die einzelnen Partikel des Gutes 14 bzw. durchströmt die Schicht des Gutes 14 auf dem Band 16. Bei diesem Umströmen der Partikel des Gutes 14 nimmt die erste Zuluft 32 Feuchtigkeit aus dem Gut 14 auf. Die relative Luftfeuchtigkeit der ersten Zuluft 32 steigt, die erste Zuluft 32 wird "feuchter". Die angefeuchtete Zuluft 32 wird nachfolgend aus der ersten Sektion 20 als erste Abluft 34 mittels einer Abluftabführung 35 mit einem Ventilator aus dem Gehäuse 12 in dessen Umgebung abgeführt. Diese Abluft stellt also Fortluft dar.

Nach der ersten Sektion 20 durchläuft das Gut 14 die zweite Sektion 22. Diese zweite Sektion 22 ist ihrerseits in zwei Bereiche 36, 38 unterteilt. Die beiden Bereiche 36, 38 sind in Reihe geschaltet und können luftströmungsmäßig weitgehend voneinander getrennt sein. Alternativ zu den dargestellten Ausführungsbeispielen können die zweite Sektion 22 und/der die erste Sektion 20 insgesamt in mehrere Bereiche, insbesondere in zwei, drei, vier oder mehr Bereiche, unterteilt sein.

An beiden Bereichen 36, 38 wird jeweils unten zweite Abluft 40 abgeführt und oben jeweils zweite Zuluft 42 zugeführt. Die zweite Abluft 40 wird mittels je einer Abluftrückführeinrichtung 44 zu einem Teil direkt als zweite Zuluft 42 in den jeweiligen Bereich zurückgeführt. Die Abluftrückführeinrichtung 44 weist dazu je eine Rückführleitung 46 auf, in der ein Ventilator 49 zum Absaugen der zweiten Abluft 40 vorgesehen ist. Vor dem Zuführen der zweiten Zuluft 42 in den jeweiligen Bereich 36, 38 ist je ein zweiter Heizer 46 vorgesehen. Der zweite Heizer 46 erwärmt dabei die zweite Zuluft 42, wodurch die relative Luftfeuchtigkeit der zweiten Zuluft 42 sinkt.

Die Rückführleitungen 46 weisen je eine Abzweigung 50 auf, an der eine Leitung 52 angeschlossen ist. An der Abzweigung 50 wird ein Teil der Abluft 40 aus der Rückführleitung 46 abgezweigt und mittels der Leitung 52 in eine Sammelleitung 54 geführt. In der Sammelleitung 54 kann dazu optional ein getrennt zu regelnder, saugender Ventilator 55 angeordnet sein.

Die Sammelleitung 54 führt die abgezweigte Abluft zu einem Wärmeübertrager 57, durch diesen hindurch und weiter in eine Weiterführung 56.

Der Wärmeübertrager 57 weist eine Trennfläche 58 an der an einer Seite die derart abgezweigte Abluft 40 und an der anderen Seite Frischluft 26 entlanggeführt wird. An der Trennfläche 58 geht so Wärme von der Abluft 40 als Abwärme 59 auf die Frischluft 26 über. Zugleich kondensiert an der Trennfläche 58 mit dem derartigen Abkühlen der Abluft 40 Wasser 60 aus der Abluft 40 aus.

Die Frischluft 26 wird mittels einer Zuluftführung 61 und einer dort vorgesehenen, getrennt zu steuernden Luftklappe durch den Wärmeübertrager 57 und dann zu einer Ableitung 62 geführt. Mittels der Ableitung 62 wird die am Wärmeübertrager 57 erwärmte Frischluft 26 zu der zweiten Sektion 22 geleitet. In der Ableitung 62 kann dazu optional ein saugender Ventilator 63 vorgesehen sein. Von der Ableitung 62 führt je eine Weiterführung 64 an einer Einmündung 65 in die Rückführleitung 46, um so die erwärmte Frischluft 26 in die zweite Sektion 22 einzuleiten. Die derart eingeleitete Frischluft 26 gelangt dann ebenfalls durch den der Rückführleitung 46 jeweils zugeordneten Heizer 48.

Die durch den Wärmeübertrager 57 hindurchgeleitete Abluft 40 gelangt mittels der Weiterführung 56 der Sammelleitung 54 weiter zu einem Wärmeübertrager 66 und durch diesen hindurch. Der Wärmeübertrager 66 weist ebenfalls eine Trennfläche 67 zum Abkühlen der Abluft 40 und zum Erwärmen von dort entlang geführter Frischluft 26 auf. Mit dem Erwärmen geht weitere Abwärme 68 der Abluft 40 auf Frischluft 26 über, zugleich kondensiert weiteres Wasser 69 aus der Abluft 40 aus.

Zum Durchleiten der Frischluft 26 durch den Wärmeübertrager 66 ist eine Zuluftzuführung 70 mit separat zu steuernder Luftklappe vorgesehen. Die erwärmte Zuluft 26 wird dann mittels einer Ableitung 71 vom Wärmeübertrager 66 zum Heizer 30 geführt, um an diesem wie oben erläutert weiter erwärmt zu werden.

Mittels einer Weiterführung 73 der Sammelleitung 54 wird die derart am Wärmeübertrager 66 weiter abgekühlte, aus der zweiten Sektion 22 stammende Abluft 40 ebenfalls zu dem Heizer 30 und weiter in die erste Sektion 20 geführt.

In Fig. 2 ist ferner dargestellt, dass an der zweiten Sektion 22 optional im Bereich der Abluftrückführeinrichtung 44 Zuluftzuführungen 74 zum Zuführen weiterer Frischluft 26 von außen und auch Abluftabführungen 75 zum Abführen von Abluft 40 nach außen mit jeweils separat zu steuernden Luftklappen vorgesehen sein können. Ferner ist eine Steuerung 76 schematisch dargestellt, welche zum Steuern der genannten Ventilatoren und Luftklappen dient und die dabei insbesondere an zugehörige (nicht dargestellte) Sensoren funktional gekoppelt ist.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Durchlauftrockner
- 12: Gehäuse
- 14: Gut
- 16: Band
- 18: Transportrichtung
- 20: Sektion
- 22: Sektion
- 24: Warmluft
- 26: Frischluft
- 28: Frischluftzuführeinrichtung
- 30: Heizer
- 32: Zuluft
- 34: Abluft
- 35: Abluftabführung
- 36: Bereich
- 38: Bereich
- 40: Abluft
- 42: Zuluft
- 44: Abluftrückführeinrichtung
- 46: Rückführleitung
- 48: Heizer
- 49: Ventilator
- 50: Abzweigung
- 52: Leitung
- 54: Sammelleitung
- 55: Ventilator
- 56: Weiterführung der Sammelleitung
- 57: Wärmeübertrager
- 58: Trennfläche
- 59: Abwärme
- 60: Wasser
- 61: Zuluftzuführung
- 62: Ableitung
- 63: Ventilator
- 64: Weiterführung der Ableitung
- 65: Einmündung
- 66: Wärmeübertrager
- 67: Trennfläche
- 68: Abwärme
- 69: Wasser
- 70: Zuluftzuführung
- 71: Ableitung
- 73: Weiterführung der Sammelleitung
- 74: Zuluftzuführung
- 75: Abluftabführung
- 76: Steuerung

## Patentansprüche

1. Durchlauftrockner (10) zum Trocknen eines Gutes (14) mittels Warmluft (24) mit einer ersten und einer zweiten Sektion (20, 22), die vom Gut (14) in einer Transportrichtung (18) nacheinander durchlaufen werden, bei dem eine Frischluftzuführeinrichtung (28) zum Zuführen von Frischluft (26) als erste Zuluft (32) in die erste Sektion (20) vorgesehen ist, eine Abluftrückführeinrichtung (44) zum Abführen von Abluft (40) aus der zweiten Sektion (22) und Rückführen als zweite Zuluft (42) zurück in die zweite Sektion (22) vorgesehen ist,
wobei ein erster Wärmeübertrager (66) vorgesehen ist, durch den hindurch zum einen Frischluft (26) in die erste Sektion (20) und zum anderen Abluft (40) aus der zweiten Sektion (22) geführt sind, zum Übertragen von Abwärme (68) der Abluft (40) aus der zweiten Sektion (22) in die in die erste Sektion (20) zuzuführende Frischluft (26),
wobei eine Leitungsanordnung (52, 54, 56, 73) vorgesehen ist, mittels der die Abluft (40) aus der zweiten Sektion (22) durch den ersten Wärmeübertrager (66) hindurch und dann in die erste Sektion (20) geführt ist,
sowie ein zweiter Wärmeübertrager (57) vorgesehen ist, durch den hindurch ebenfalls zum einen Frischluft (26) und zum anderen Abluft (40) aus der zweiten Sektion (22) geführt sind, zum Übertragen von Abwärme (59) der Abluft (40) aus der zweiten Sektion (22) in die Frischluft (26), wobei die dabei erwärmte Frischluft (26) in die zweite Sektion (22) geführt ist.

2. Durchlauftrockner nach Anspruch 1,
**dadurch gekennzeichnet, dass** der erste Wärmeübertrager (66) derart dimensioniert ist, dass an ihm Wasser (69) aus der Abluft (40) auskondensiert.

3. Durchlauftrockner nach Anspruch 1 oder 2,
**dadurch gekennzeichnet, dass** der zweite Wärmeübertrager (57) derart dimensioniert ist, dass an ihm Wasser (60) aus der Abluft (40) auskondensiert.

4. Durchlauftrockner nach einem der Ansprüche 1 bis 3,
**dadurch gekennzeichnet, dass** hinsichtlich der Strömungsrichtung der Abluft (40) der zweite Wärmeübertrager (57) vor dem ersten Wärmeübertrager (66) angeordnet ist.

5. Durchlauftrockner nach einem der Ansprüche 1 bis 4,
**dadurch gekennzeichnet, dass** Steuerungsmittel (61, 71) vorgesehen sind, mittels denen ein Durchleiten von Frischluft (26) durch den ersten Wärmeübertrager (66) und den zweiten Wärmeübertrager (57) getrennt zu steuern sind.

6. Durchlauftrockner nach einem der Ansprüche 1 bis 5,
**dadurch gekennzeichnet, dass** ein erster Heizer (30) vorgesehen ist, mittels dem die erste Zuluft (32) vor deren Zuführen in die erste Sektion (20) und die durch den ersten Wärmeübertrager (66) geführte Abluft (40) aus der zweiten Sektion (22) vor deren Zuführen in die erste Sektion (20) aufzuheizen sind.

7. Durchlauftrockner nach einem der Ansprüche 1 bis 6,
**dadurch gekennzeichnet, dass** ein zweiter Heizer (48) vorgesehen ist, mittels dem die zweite Zuluft (42) vor deren Rückführen in die zweite Sektion (22) und die durch den zweiten Wärmeübertrager (57) geführte Frischluft (26) vor deren Zuführen in die zweite Sektion (22) aufzuheizen sind.

8. Durchlauftrockner nach einem der Ansprüche 1 bis 7,
**dadurch gekennzeichnet, dass** bei der zweiten Sektion (22) mindestens zwei Bereiche (36, 38) vorgesehen sind und die Abluft (40) der beiden Bereiche gesammelt durch den ersten Wärmeübertrager (66) geführt ist.

9. Verfahren zum Betreiben eines Durchlauftrockners (10) zum Trocknen eines Gutes (14) mittels Warmluft (24), wobei eine erste und eine zweite Sektion (20, 22) vom Gut (14) in einer Transportrichtung (18) nacheinander durchlaufen werden, Frischluft (26) als erste Zuluft (32) in die erste Sektion (20) zugeführt wird, Abluft (40) aus der zweiten Sektion (22) abgeführt und als zweite Zuluft (42) in die zweite Sektion (22) zurückgeführt wird,
wobei durch einen ersten Wärmeübertrager (66) hindurch zum einen Frischluft (26) in die erste Sektion (20) und zum anderen Abluft (40) aus der zweiten Sektion (22) geführt wird, zum Übertragen von Abwärme (68) der Abluft (40) aus der zweiten Sektion (22) in die in die erste Sektion (20) zuzuführende Frischluft (26), wobei die Abluft (40) aus der zweiten Sektion (22) durch den ersten Wärmeübertrager (66) hindurch und dann in die erste Sektion (20) geführt wird, sowie durch einen zweiten Wärmeübertrager (57) hindurch ebenfalls zum einen Frischluft (26) und zum anderen Abluft (40) aus der zweiten Sektion (22) geführt wird, zum Übertragen von Abwärme (59) der Abluft (40) aus der zweiten Sektion (22) in die Frischluft (26), wobei die dabei erwärmte Frischluft (26) in die zweite Sektion (22) geführt wird.

## Claims

1. Continuous dryer (10) for drying a material (14) by means of warm air (24) with a first and a second section (20, 22), which are passed through by the material (14) one after the other in a transport direction (18), in which a fresh air supply device (28) for supplying fresh air (26) as first supply air (32) into the first section (20) is provided, an exhaust air return device (44) for discharging exhaust air (40) from the second section (22) and returning it as second supply air (42) back into the second section (22) is provided,
wherein a first heat exchanger (66) is provided, through which on the one hand fresh air (26) into the first section (20) and on the other hand exhaust air (40) from the second section (22) are guided, for transferring waste heat (68) of the exhaust air (40) from the second section (22) to the fresh air (26) to be supplied to the first section (20),
wherein a line arrangement (52, 54, 56, 73) is provided, by means of which the exhaust air (40) from the second section (22) is guided through the first heat exchanger (66) and then into the first section (20),
and a second heat exchanger (57) is provided, through which likewise on the one hand fresh air (26) and on the other hand exhaust air (40) from the second section (22) are guided, for transferring waste heat (59) of the exhaust air (40) from the second section (22) to the fresh air (26), wherein the fresh air (26) heated thereby is guided into the second section (22).

2. Continuous dryer according to claim 1,
**characterized in that** the first heat exchanger (66) is dimensioned such that water (69) condenses out of the exhaust air (40) on it.

3. Continuous dryer according to claim 1 or 2,
**characterized in that** the second heat exchanger (57) is dimensioned such that water (60) condenses out of the exhaust air (40) on it.

4. Continuous dryer according to any one of claims 1 to 3,
**characterized in that** with regard to the flow direction of the exhaust air (40), the second heat exchanger (57) is arranged before the first heat exchanger (66).

5. Continuous dryer according to any one of claims 1 to 4,
**characterized in that** control means (61, 71) are provided, by means of which a passage of fresh air (26) through the first heat exchanger (66) and the second heat exchanger (57) can be controlled separately.

6. Continuous dryer according to any one of claims 1 to 5,
**characterized in that** a first heater (30) is provided, by means of which the first supply air (32) before its supply to the first section (20) and the exhaust air (40) from the second section (22) guided through the first heat exchanger (66) before its supply to the first section (20) are to be heated.

7. Continuous dryer according to any one of claims 1 to 6,
**characterized in that** a second heater (48) is provided, by means of which the second supply air (42) before its return to the second section (22) and the fresh air (26) guided through the second heat exchanger (57) before its supply to the second section (22) are to be heated.

8. Continuous dryer according to any one of claims 1 to 7,
**characterized in that** in the second section (22) at least two regions (36, 38) are provided and the exhaust air (40) of the two regions is guided collectively through the first heat exchanger (66).

9. Method for operating a continuous dryer (10) for drying a material (14) by means of warm air (24), wherein a first and a second section (20, 22) are passed through by the material (14) one after the other in a transport direction (18), fresh air (26) is supplied as first supply air (32) to the first section (20), exhaust air (40) is discharged from the second section (22) and returned as second supply air (42) to the second section (22),
wherein through a first heat exchanger (66) on the one hand fresh air (26) into the first section (20) and on the other hand exhaust air (40) from the second section (22) are guided, for transferring waste heat (68) of the exhaust air (40) from the second section (22) to the fresh air (26) to be supplied to the first section (20), wherein the exhaust air (40) from the second section (22) is guided through the first heat exchanger (66) and then into the first section (20),
and through a second heat exchanger (57) likewise on the one hand fresh air (26) and on the other hand exhaust air (40) from the second section (22) are guided, for transferring waste heat (59) of the exhaust air (40) from the second section (22) to the fresh air (26), wherein the fresh air (26) heated thereby is guided into the second section (22).

## Revendications

1. Séchoir continu (10) pour le séchage d'un objet (14) au moyen d'air chaud (24) avec une première et une deuxième section (20, 22), qui sont traversées l'une après l'autre par l'objet (14) dans une direction de transport (18), dans lequel un dispositif d'alimentation en air frais (28) pour l'amenée d'air frais (26) en tant que premier air d'alimentation (32) dans la première section (20) est prévu, un dispositif de recirculation d'air vicié (44) pour l'évacuation d'air vicié (40) de la deuxième section (22) et la recirculation en tant que deuxième air d'alimentation (42) dans la deuxième section (22) est prévu,
un premier échangeur de chaleur (66) étant prévu, à travers lequel sont guidés, d'une part, de l'air frais (26) dans la première section (20) et, d'autre part, de l'air vicié (40) provenant de la deuxième section (22), pour le transfert de la chaleur perdue (68) de l'air vicié (40) de la deuxième section (22) à l'air frais (26) à amener à la première section (20),
un agencement de conduites (52, 54, 56, 73) étant prévu, au moyen duquel l'air vicié (40) de la deuxième section (22) est guidé à travers le premier échangeur de chaleur (66) puis dans la première section (20),
et un deuxième échangeur de chaleur (57) étant prévu, à travers lequel sont également guidés, d'une part, de l'air frais (26) et, d'autre part, de l'air vicié (40) de la deuxième section (22), pour le transfert de la chaleur perdue (59) de l'air vicié (40) de la deuxième section (22) à l'air frais (26), l'air frais (26) ainsi chauffé étant guidé dans la deuxième section (22).

2. Séchoir continu selon la revendication 1,
**caractérisé en ce que** le premier échangeur de chaleur (66) est dimensionné de telle sorte que de l'eau (69) se condense sur celui-ci à partir de l'air vicié (40).

3. Séchoir continu selon la revendication 1 ou 2,
**caractérisé en ce que** le deuxième échangeur de chaleur (57) est dimensionné de telle sorte que de l'eau (60) se condense sur celui-ci à partir de l'air vicié (40).

4. Séchoir continu selon l'une des revendications 1 à 3,
**caractérisé en ce que**, par rapport à la direction d'écoulement de l'air vicié (40), le deuxième échangeur de chaleur (57) est disposé en amont du premier échangeur de chaleur (66).

5. Séchoir continu selon l'une des revendications 1 à 4,
**caractérisé en ce que** des moyens de commande (61, 71) sont prévus, au moyen desquels un passage d'air frais (26) à travers le premier échangeur de chaleur (66) et le deuxième échangeur de chaleur (57) peut être commandé séparément.

6. Séchoir continu selon l'une des revendications 1 à 5,
**caractérisé en ce qu'**un premier dispositif de chauffage (30) est prévu, au moyen duquel le premier air d'alimentation (32) avant son amenée à la première section (20) et l'air vicié (40) de la deuxième section (22) guidé à travers le premier échangeur de chaleur (66) avant son amenée à la première section (20) doivent être chauffés.

7. Séchoir continu selon l'une des revendications 1 à 6,
**caractérisé en ce qu'**un deuxième dispositif de chauffage (48) est prévu, au moyen duquel le deuxième air d'alimentation (42) avant sa recirculation dans la deuxième section (22) et l'air frais (26) guidé à travers le deuxième échangeur de chaleur (57) avant son amenée à la deuxième section (22) doivent être chauffés.

8. Séchoir continu selon l'une des revendications 1 à 7,
**caractérisé en ce que** dans la deuxième section (22) au moins deux zones (36, 38) sont prévues et l'air vicié (40) des deux zones est guidé collectivement à travers le premier échangeur de chaleur (66).

9. Procédé de fonctionnement d'un séchoir continu (10) pour le séchage d'un objet (14) au moyen d'air chaud (24), dans lequel une première et une deuxième section (20, 22) sont traversées l'une après l'autre par l'objet (14) dans une direction de transport (18), de l'air frais (26) est amené en tant que premier air d'alimentation (32) à la première section (20), de l'air vicié (40) est évacué de la deuxième section (22) et recirculé en tant que deuxième air d'alimentation (42) dans la deuxième section (22),
dans lequel à travers un premier échangeur de chaleur (66) sont guidés, d'une part, de l'air frais (26) dans la première section (20) et, d'autre part, de l'air vicié (40) de la deuxième section (22), pour le transfert de la chaleur perdue (68) de l'air vicié (40) de la deuxième section (22) à l'air frais (26) à amener dans la première section (20), l'air vicié (40) de la deuxième section (22) étant guidé à travers le premier échangeur de chaleur (66) puis dans la première section (20),
et à travers un deuxième échangeur de chaleur (57) sont également guidés, d'une part, de l'air frais (26) et, d'autre part, de l'air vicié (40) de la deuxième section (22), pour le transfert de la chaleur perdue (59) de l'air vicié (40) de la deuxième section (22) à l'air frais (26), l'air frais (26) ainsi chauffé étant guidé dans la deuxième section (22).
